# EUROPEAN PATENT APPLICATION

(11) **EP 4 744 961 A1**
(43) Date of publication of application: **20.05.2026**
(21) Application number: 25210668.7
(22) Date of filing: 23.10.2025
(51) Int. Cl.: B60N 2/75

(54) **ARMREST POP-UP DEVICE**

(30) Priority: 19.11.2024 KR 20240165170
(71) Applicant: Hyundai Transys Inc., Chungcheongnam-do 31930 (KR)
(72) Inventor: CHO, Yongjin, 18463 Hwaseong-si, Gyeonggi-do (KR); KIM, Min Seong, 18463 Hwaseong-si, Gyeonggi-do (KR)
(74) Representative: Viering, Jentschura & Partner mbB Patent- und Rechtsanwälte

(57) **Abstract**

An armrest pop-up device is configured to pop up an armrest accommodated in an accommodation part of a seatback frame so that the armrest is withdrawn from the accommodation part, or to accommodate the popped-up armrest in the accommodation part. The armrest pop-up includes a bracket configured to be coupled to the seatback frame; a shaft having one end configured to be connected to the armrest; a movable member having one end connected to another end of the shaft opposite to the one end of the shaft; a support member coupled to the bracket and positioned facing the another end of the shaft; an elastic member positioned between the shaft and the support member; and a pin member coupled to the support member and having a pin.

## Description

### CROSS-REFERENCE TO RELATED APPLICATIONS

This application claims priority to and the benefit of Korean Patent Application No. 10-2024-0165170 filed in the Korean Intellectual Property Office on November 19, 2024, the entire contents of which are incorporated herein by reference.

### TECHNICAL FIELD

The present disclosure relates to an armrest pop-up device mounted on a seatback frame of a vehicle.

### BACKGROUND

Korean Patent Application Laid-Open No. 10-2005-0032393 discloses an armrest provided in a vehicle seat, and the vehicle seat has a mounting groove formed in a portion where a driver's right arm is positioned. The armrest is hingedly coupled to one side of the mounting groove formed in the vehicle seat, and the armrest is withdrawn from or accommodated in the mounting groove while rotating.

In general, for passenger convenience, an armrest may be installed in a second-row independent seat of a sports utility vehicle (SUV). A shaft of the armrest may be coupled to a seatback frame. The armrest may rotate about the shaft. When the armrest is not being used, the armrest may be stored in a standing state at one side of a seatback. When the armrest is to be used, the armrest may be rotated about the shaft and used in a horizontal state. A passenger may place his/her armrest in the horizontal state and take a comfortable posture.

However, because the armrest in the related art is disposed adjacent to a central passageway between left and right second-row independent seats of the sports utility vehicle (SUV), the central passageway may be narrowed. For this reason, the passenger is inevitably put into an inconvenient situation when the passenger moves from the second row to the third row through the central passageway.

### [Document of Related Art]

### [Patent Document]

(Patent Document 1) Korean Patent Application Laid-Open No. 10-2005-0032393 (published on April 7, 2005)

### SUMMARY OF THE DISCLOSURE

The present disclosure has been made in an effort to provide an armrest pop-up device capable of accommodating an armrest in an accommodation part of a seatback frame when the armrest is not used, and allowing the armrest, which is accommodated in the accommodation part of the seatback frame, to pop up so as to be withdrawn from the accommodation part when the armrest is used.

In order to achieve the above-mentioned object, the present disclosure provides an armrest pop-up device configured to pop up an armrest accommodated in an accommodation part of a seatback frame so that the armrest is withdrawn from the accommodation part, or to accommodate the armrest that is popped up in the accommodation part.

In addition, the armrest pop-up device may include: a bracket configured to be coupled to the seatback frame; a shaft having one end configured to be connected to the armrest; a movable member having one end connected to another end of the shaft opposite to the one end of the shaft, the movable member being movable in the bracket and having a passageway positioned in the movable member; a support member coupled to the bracket and positioned facing the another end of the shaft; an elastic member positioned between the shaft and the support member, the elastic member having one end positioned adjacent to the another end of the shaft through a through-hole positioned in the movable member, and another end coupled to the support member, the elastic member being configured to be compressed by being pushed by the shaft; and a pin member coupled to the support member and having a pin, wherein the movable member is configured receive a pressing force of the armrest such that the movable member moves, and wherein the pin is configured to be positioned inside or outside the passageway by an operation of the movable member.

In addition, the passageway may include: an inlet having a width that decreases in an inward direction; a first groove communicating with the inlet and positioned at a first end of an inner end of the passageway; a guide member positioned between the inlet and the first groove, having a triangular shape, and having a second groove; a third groove communicating with the inlet, spaced apart from the first groove at an interval, and positioned at a second end of the inner end of the passageway adjacent to the first groove; and a partition wall disposed between the first groove and the third groove and having an inclined surface, the inclined surface being directed toward the second groove, and the guide member may include: a first inclined surface configured to guide the pin so that the pin is positioned in the first groove; and a second inclined surface that defines an acute angle with respect to the first inclined surface, the second inclined surface being configured to guide the pin from the third groove toward the inlet.

In addition, when the armrest positioned outside the accommodation part is pressed, the movable member may be configured to receive the pressing force of the armrest at a same time when the armrest is inserted into the accommodation part, and the movable member may be configured to move in a direction toward the pin, such that the pin positioned outside the passageway may move to the first groove.

In addition, when the pressing force applied to the armrest is eliminated, the elastic member, which is configured to be stretched after being compressed by being pressed by the shaft, may be configured to apply an elastic force to the movable member connected to the shaft, the movable member may be configured to move in a direction toward the accommodation part, the pin may be configured to move from the first groove to the second groove, and the shaft and the movable member may be configured to be restricted in movement toward the accommodation part when the pin is positioned in the second groove, such that an accommodated state of the armrest may be maintained.

In addition, when the armrest accommodated in the accommodation part is pressed, the movable member is configured to receive the pressing force of the armrest, and the movable member may be configured to move in a direction toward the pin, such that the pin may be moved from the second groove to the third groove.

In addition, when the pressing force applied to the armrest is eliminated, the elastic member, which may be configured to be stretched to an original state after being compressed by being pressed by the shaft, may be configured to apply an elastic force to the movable member connected to the shaft, the movable member may be configured to move in a direction toward the accommodation part, the pin may be configured to move from the third groove to a position outside the passageway, and the elastic member may be configured to apply the elastic force to the shaft connected to the movable member, such that a pop-up state of the armrest may be implemented in which the armrest connected to the shaft is withdrawn from the accommodation part.

In addition, the support member may include: an insertion protrusion protruding toward the elastic member and inserted into an inner-diameter portion of the elastic member; and a pair of catching projections positioned at two opposite sides of one surface of the support member to which the pin member is coupled.

In addition, the support member may include a rotary shaft positioned on a bottom surface of the pin member, and the rotary shaft may be coupled to one surface of the support member.

In addition, the pin member may be coupled to be positioned between a pair of catching projections positioned at two opposite sides of one surface of the support member, and the pin member may be rotatable about the rotary shaft within a range between the pair of catching projections.

In addition, a cover may be coupled to one open side of the bracket, and the cover may be configured to be coupled to the seatback frame.

In addition, a protrusion of the shaft may be positioned at the another end of the shaft, and the protrusion of the shaft may be inserted into an inner-diameter portion of the elastic member.

In addition, the first groove, the second groove, the third groove, and the pin may be disposed on a same horizontal plane extending through the passageway.

In addition, when the pressing force applied to the armrest is eliminated, the elastic member may be configured to expand to an original state after being compressed by the shaft, and the second groove may be defined to be sunken in a direction opposite to a direction of expansion of the elastic member, such that movement of the shaft and the movable member toward the accommodation part may be restricted when the pin is positioned in the second groove.

In addition, when viewed from a top of a longitudinal cross-section of the passageway, the inclined surface of the partition wall may form an acute angle with respect to a sidewall surface of the first groove, and the inclined surface of the partition wall may form an obtuse angle with respect to a sidewall surface of the third groove.

In addition, the range between the pair of catching projections may be greater than a thickness of a partition wall disposed between a first groove and a third groove, the first groove and the third groove being positioned at a first end and a second end of an inner end of the passageway, respectively.

In addition, when viewed from a top of a longitudinal cross-section of the passageway, an end of the first inclined surface opposite to another end of the first inclined surface meeting with the second inclined surface to define the acute angle may be positioned higher than the first groove.

In addition, when viewed from a top of a longitudinal cross-section of the passageway, an end of the second inclined surface opposite to another end of the second inclined surface meeting with the first inclined surface to define the acute angle may be positioned higher than the third groove.

In addition, a width between the second inclined surface and a sidewall surface of the passageway adjacent to the second inclined surface may decrease toward the inlet.

In addition, the range between the pair of catching projections may be equal to or smaller than a width of an inlet of the passageway at an open end thereof.

According to the present disclosure, the armrest is accommodated in the accommodation part of the seatback frame by the armrest pop-up device, such that the central passageway between the left and right seats of the sports utility vehicle may be ensured, thereby providing convenience for the passenger's movement through the central passageway.

In addition, according to the present disclosure, it is possible to improve the marketability by increasing the seat package space.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a view illustrating a state in which an armrest pop-up device according to an exemplary embodiment of the present disclosure is mounted on a seatback frame.
FIG. 2 is a view illustrating a state in which an armrest and the armrest pop-up device according to the exemplary embodiment of the present disclosure are separated.
FIG. 3 is an exploded perspective view of the armrest pop-up device according to the exemplary embodiment of the present disclosure.
FIG. 4 is a side view of the armrest pop-up device according to the exemplary embodiment of the present disclosure.
FIG. 5 is a view illustrating a position of a pin before a movable member according to the exemplary embodiment of the present disclosure operates.
FIG. 6 is a view illustrating a state in which the pin according to the exemplary embodiment of the present disclosure is positioned in a first groove of the movable member.
FIG. 7 is a view illustrating a state in which the pin according to the exemplary embodiment of the present disclosure is positioned in a second groove of the movable member.
FIG. 8 is a view illustrating a state in which the pin according to the exemplary embodiment of the present disclosure is positioned in a third groove of the movable member.
FIG. 9 is a view illustrating a state in which the pin according to the exemplary embodiment of the present disclosure is positioned outside a passageway of the movable member.

It should be understood that the appended drawings are not necessarily to scale, presenting a somewhat simplified representation of various features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, exemplary embodiments of the present disclosure will be described in detail with reference to the accompanying drawings. First, in assigning reference numerals to constituent elements of the respective drawings, it should be noted that the same constituent elements will be designated by the same reference numerals, if possible, even though the constituent elements are illustrated in different drawings. In addition, in the description of the present disclosure, the specific descriptions of publicly known related configurations or functions will be omitted when it is determined that the specific descriptions may obscure the subject matter of the present disclosure. Further, the exemplary embodiments of the present disclosure will be described below, but the technical spirit of the present disclosure is not limited thereto and may, of course, be modified and variously carried out by those skilled in the art.

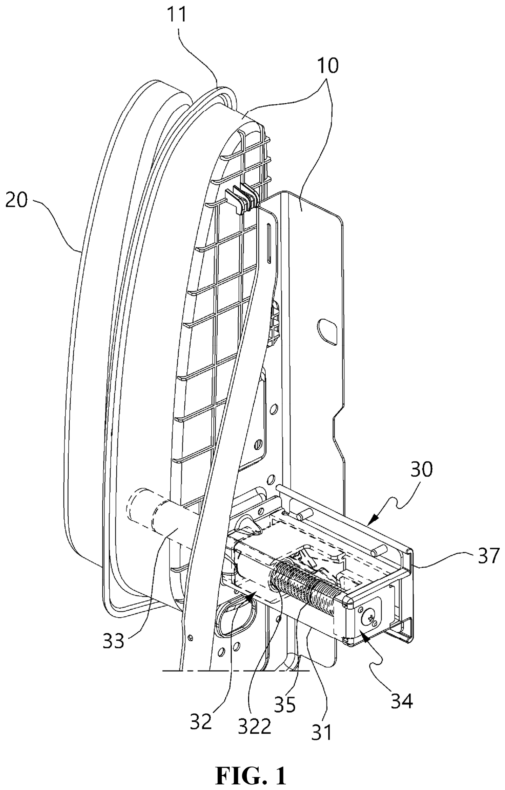

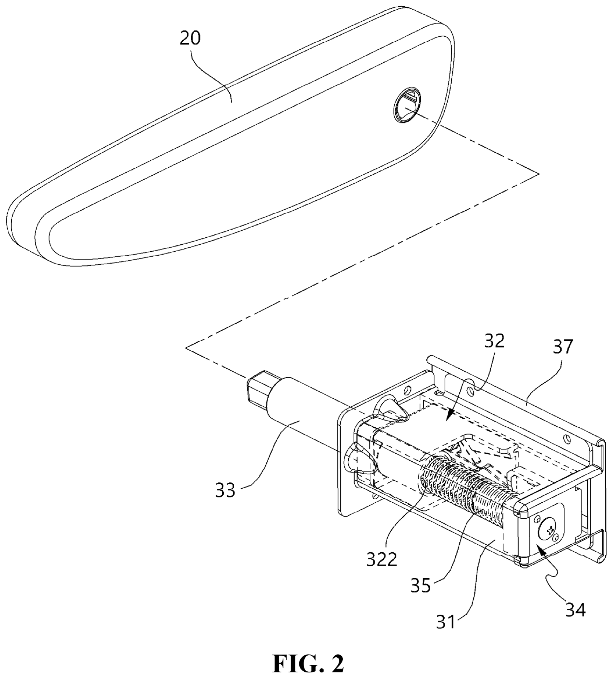

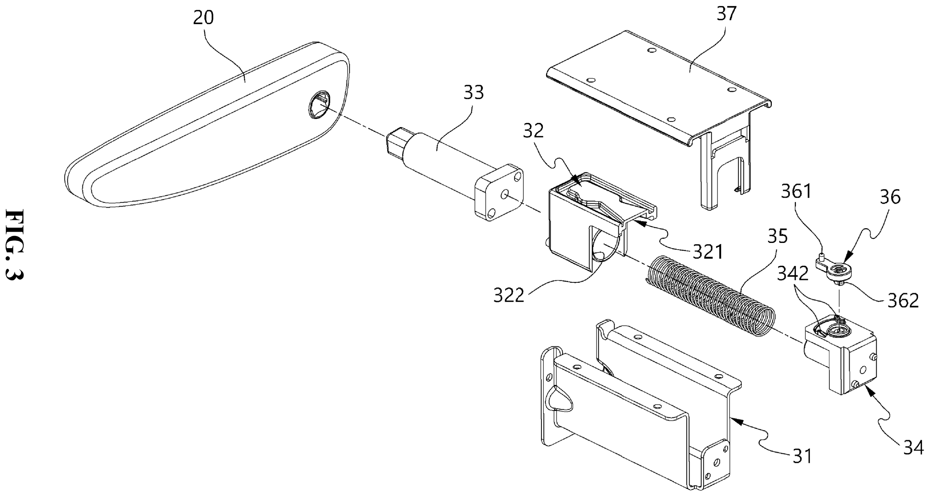

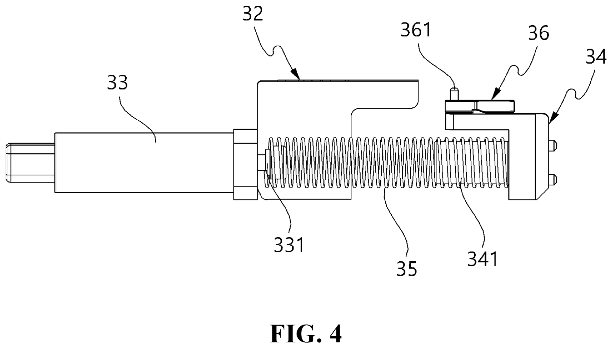

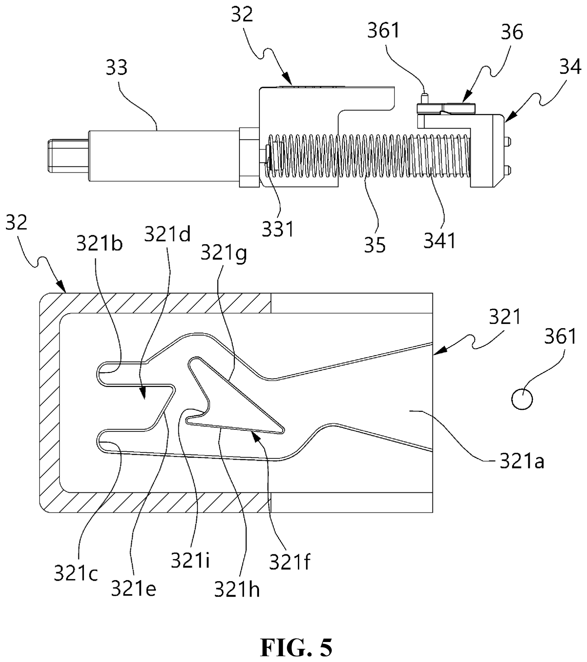

FIG. 1 is a view illustrating a state in which an armrest pop-up device according to an exemplary embodiment of the present disclosure is mounted on a seatback frame. FIG. 2 is a view illustrating a state in which an armrest and the armrest pop-up device according to the exemplary embodiment of the present disclosure are separated. FIG. 3 is an exploded perspective view of the armrest pop-up device according to the exemplary embodiment of the present disclosure. FIG. 4 is a side view of the armrest pop-up device according to the exemplary embodiment of the present disclosure. FIG. 5 is a view illustrating a position of a pin before a movable member according to the exemplary embodiment of the present disclosure operates.

As illustrated in FIGS. 1 to 5, an armrest pop-up device 30 of the present disclosure may pop up an armrest 20 accommodated in an accommodation part 11 of a seatback frame 10 so that the armrest 20 is withdrawn from the accommodation part 11, or the armrest pop-up device 30 may accommodate the popped-up armrest 20 in the accommodation part 11.

The armrest pop-up device 30 of the present disclosure may include a bracket 31 coupled to the seatback frame 10, a shaft 33 connected to the armrest 20, a movable member 32 connected to the shaft 33 and configured to slide in the bracket 31, a support member 34 coupled to the bracket 31, an elastic member 35 positioned between the shaft 33 and the support member 34, a pin member 36 coupled to the support member 34, and a cover 37 coupled to the bracket 31.

The accommodation part 11 may provide a space that conforms to the armrest 20 so that the armrest 20 may be completely inserted into the accommodation part 11.

The bracket 31 may be coupled to the seatback frame 10 by a coupling member such as a bolt. One side of the bracket 31 may be structured to be open. The cover 37 may be coupled to one open side of the bracket 31. The cover 37 may be coupled to the seatback frame 10.

One end of the shaft 33 may be connected to the armrest 20. The other end of the shaft 33 may be connected to the movable member 32. A pressing force applied by the armrest 20 may be applied to the movable member 32 through the shaft 33.

A protrusion 331 may be formed at the other end of the shaft 33. The protrusion 331 may be inserted into an inner-diameter portion of the elastic member 35.

One end of the movable member 32 may be connected to the other end of the shaft 33. In the state in which the movable member 32 is connected to the shaft 33, the movable member 32 may slide in a longitudinal direction in the bracket 31. A passageway 321 may be provided in the movable member 32.

The passageway 321 may include an inlet 321a, a first groove 321b, a second groove 321i provided in a guide member 321f, a third groove 321c, and a partition wall 321d.

The inlet 321a may be configured such that a width thereof decreases in an inward direction.

The first groove 321b may be configured to communicate with the inlet 321a. The first groove 321b may be provided at a first end of an inner end of the passageway 321. For example, when viewed in FIG. 5, which includes a top view of a longitudinal cross-section of the passageway 321, the first groove 321b may be provided at an upper end of the inner end of the passageway 321.

The third groove 321c may be configured to communicate with the inlet 321a. The third groove 321c may be spaced apart from the first groove 321b at an interval and disposed at a second end of the inner end of the passageway 321. The second end of the inner end of the passageway 321, the first end of the inner end of the passageway 321, and the pin 361 may be disposed on the same plane. For example, when viewed in FIG. 5, the third groove 321c may be spaced apart from the first groove 321b at an interval and disposed below the first groove 321b.

The partition wall 321d may be provided between the first groove 321b and the third groove 321c. The partition wall 321d may have an inclined surface 321e. The inclined surface 321e may be provided on one surface of the partition wall 321d directed toward the inlet 321a.

The guide member 321f may be positioned between the inlet 321a and the first and third grooves 321b and 321c. The guide member 321f may be configured in a triangular shape.

The guide member 321f may include a first inclined surface 321g, a second inclined surface 321h, and the second groove 321i.

The first inclined surface 321g may guide a pin 361 so that the pin 361 is positioned in the first groove 321b when the movable member 32 slides.

The second inclined surface 321h may be configured as an inclined surface configured to define an acute angle with respect to the first inclined surface 321g. The second inclined surface 321h may guide the pin 361 so that the pin 361 moves from the third groove 321c toward the inlet 321a when the movable member 32 slides.

The second groove 321i may be configured to be directed toward the inclined surface 321e of the partition wall 321d.

The support member 34 may be coupled and fixed to the bracket 31. The support member 34 may be positioned opposite to the other end of the shaft 33 and spaced apart from the other end of the shaft 33 at an interval. The support member 34 may include an insertion protrusion 341 and a pair of catching projections 342.

The insertion protrusion 341 may protrude toward the elastic member 35. The insertion protrusion 341 may be inserted into the inner-diameter portion of the elastic member 35.

The pair of catching projections 342 may be provided at two opposite sides of one surface of the support member 34 to which the pin member 36 is coupled.

The elastic member 35 may be a spring. The elastic member 35 may be disposed between the shaft 33 and the support member 34 and elastically support the shaft 33. The elastic member 35 may be compressed by being pressed by the shaft 33. When a pressing force applied by the shaft 33 is eliminated in the compressed state of the elastic member 35, the elastic member 35 may be stretched and push the shaft 33 in a direction toward the accommodation part 11.

One end of the elastic member 35 may penetrate a through-hole 322 of the movable member 32 and be positioned adjacent to the other end of the shaft 33. The other end of the elastic member 35 may be coupled to the insertion protrusion 341 of the support member 34.

The pin member 36 may include the pin 361 and a rotary shaft 362. The rotary shaft 362 may be provided on a bottom surface of the pin member 36. The rotary shaft 362 may be coupled to one surface of the support member 34. The pin member 36 may rotate about the rotary shaft 362.

The pin member 36 may be coupled to be positioned between the pair of catching projections 342 of the support member 34. The pin member 36 may rotate about the rotary shaft 362 within a range between the pair of catching projections 342.

The armrest 20 may be accommodated or the armrest 20 may be popped up by the sliding movement of the movable member 32 while the pin 361 does not move. More specifically, the armrest 20 may be accommodated in the accommodation part 11 or be popped out of the accommodation part 11 by the sliding movement of the movable member 32 along the longitudinal direction in the bracket 31 while the pin 361 does not move along the longitudinal direction in the bracket 31.

For example, when the pin 361 is positioned in the second groove 321i of the movable member 32, the armrest 20 may be accommodated in the accommodation part 11. When the pin 361 is positioned outside the passageway 321 of the movable member 32, the armrest 20 may be popped up.

Next, the operation of accommodating or popping up the armrest of the present disclosure will be described.

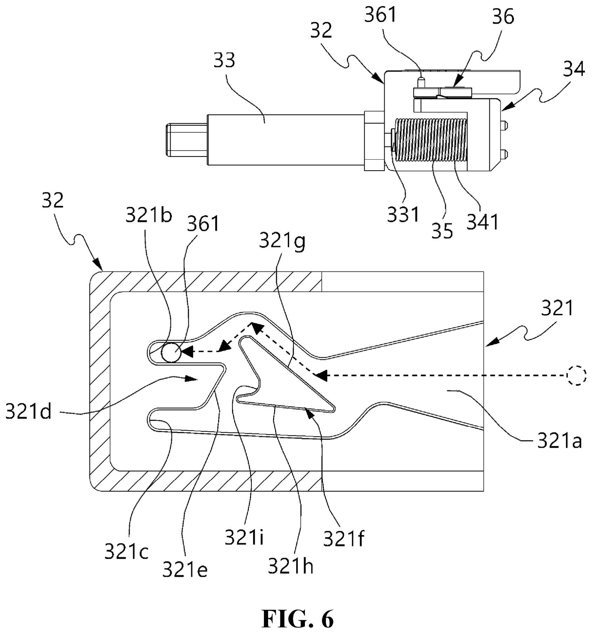

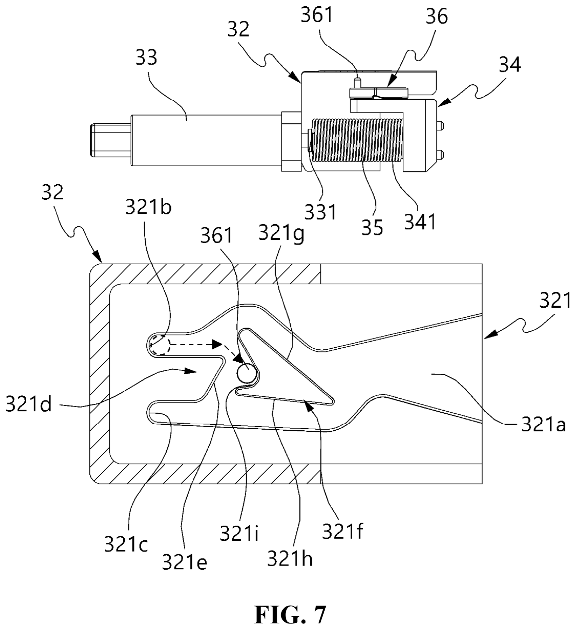

FIG. 6 is a view illustrating a state in which the pin according to the exemplary embodiment of the present disclosure is positioned in the first groove of the movable member. FIG. 7 is a view illustrating a state in which the pin according to the exemplary embodiment of the present disclosure is positioned in the second groove of the movable member.

As illustrated in FIGS. 1, 3, and 5, in case that no pressing force is applied to the armrest 20 positioned outside the accommodation part 11 of the seatback frame 10, the pin 361 may be positioned outside the passageway 321 of the movable member 32.

As illustrated in FIG. 6, when the armrest 20 positioned outside the accommodation part 11 of the seatback frame 10 is pressed, the armrest 20 moves in the direction toward the accommodation part 11, and the pressing force of the armrest 20 is transmitted to the shaft 33, which is connected to the armrest 20, in conjunction with the movement of the armrest 20, such that the shaft 33 may push the movable member 32.

When the movable member 32 slides in the direction toward the pin 361 by being pushed by the shaft 33, the pin 361 may be positioned in the first groove 321b through the inlet 321a.

At the same time, the elastic member 35 may be compressed by being pushed by the movable member 32 that slides in the direction toward the pin 361.

When the pressing force applied to the armrest 20 is eliminated in the state in which the pin 361 is positioned in the first groove 321b, the elastic member 35, which has been compressed by being pushed by the movable member 32, may be stretched and push the shaft 33 in the direction toward the accommodation part 11.

When the shaft 33 is pushed in the direction toward the accommodation part 11, the movable member 32 connected to the shaft 33 may also slide in the direction toward the accommodation part 11 together with the shaft 33.

As the movable member 32 slides in the direction toward the accommodation part 11, the pin 361 may be positioned in the second groove 321i.

When the pin 361 is positioned in the second groove 321i, the movement of the movable member 32 may be restricted. As the movement of the movable member 32 is restricted, the movement of the shaft 33 connected to the movable member 32 may be restricted. As the movement of the shaft 33 is restricted, the motion of the armrest 20 connected to the shaft 33 may be restricted. Therefore, the accommodated state of the armrest 20 may be implemented in which the armrest 20 is completely inserted into the accommodation part 11.

Meanwhile, because the pin member 36 may freely rotate about the rotary shaft 362 within a range between the pair of catching projections 342, there is no problem in that the pin 361 is positioned in any one groove among the first groove 321b, the second groove 321i, and the third groove 321c.

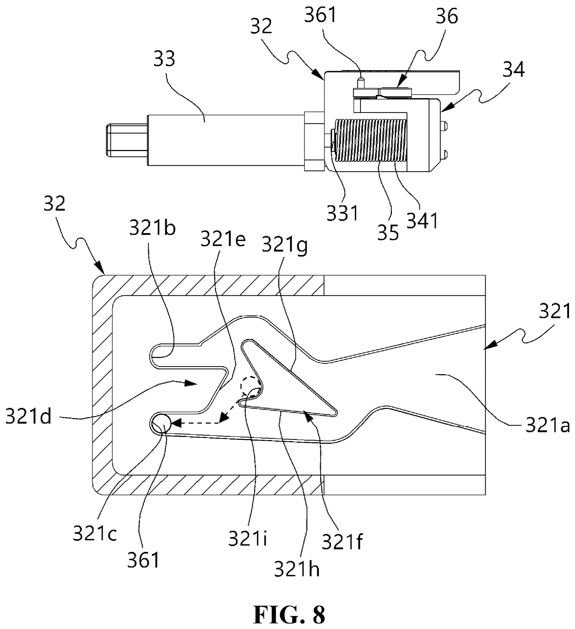

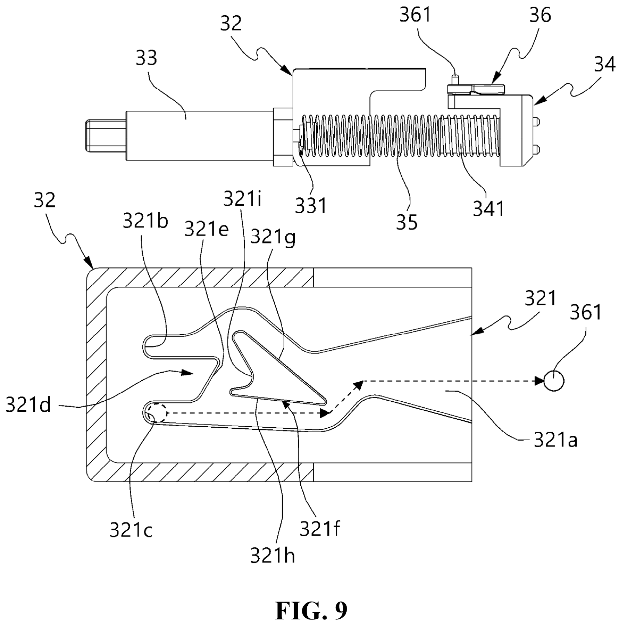

FIG. 8 is a view illustrating a state in which the pin according to the exemplary embodiment of the present disclosure is positioned in the third groove of the movable member. FIG. 9 is a view illustrating a state in which the pin according to the exemplary embodiment of the present disclosure is positioned outside the passageway of the movable member.

As illustrated in FIGS. 1, 3, 7, when the armrest 20 is pressed in the state in which the armrest 20 is accommodated in the accommodation part 11 and the pin 361 is positioned in the second groove 321i, the pressing force of the armrest 20 is applied to the shaft 33 connected to the armrest 20, such that the shaft 33 may move in the direction toward the pin 361.

As illustrated in FIG. 8, when the movable member 32, which is connected to the shaft 33, is pushed by the shaft 33 that moves in the direction toward the pin 361 and the movable member 32 slides in the direction toward the pin 361 together with the shaft 33, the pin 361 positioned in the second groove 3211 may be positioned in the third groove 321c while being guided by the inclined surface 321e of the partition wall 321d.

As illustrated in FIG. 9, when the pressing force of the armrest 20 is eliminated in the state in which the pin 361 is positioned in the third groove 321c, the elastic member 35 pushes the shaft 33 in the direction toward the accommodation part 11 while being stretched to an original state, and the movable member 32 connected to the shaft 33 is pushed in the direction toward the accommodation part 11 together with the shaft 33, such that the pin 361 may depart from the third groove 321c and the inlet 321a and be positioned outside the passageway 321. At the same time, the armrest 20 connected to the shaft 33 may completely depart from the accommodation part and pop up.

According to the present disclosure described above, the armrest is accommodated in the accommodation part of the seatback frame by the armrest pop-up device, such that the central passageway between the left and right seats of the sports utility vehicle may be ensured, thereby providing convenience for the passenger's movement through the central passageway. In addition, according to the present disclosure, it is possible to improve the marketability by increasing the seat package space.

The above description is simply given for illustratively describing the technical spirit of the present disclosure, and those skilled in the art to which the present disclosure pertains will appreciate that various modifications, changes, and substitutions are possible without departing from the essential characteristics of the present disclosure. Accordingly, the embodiments disclosed in the present disclosure and the accompanying drawings are intended not to limit but to describe the technical spirit of the present disclosure, and the scope of the technical spirit of the present disclosure is not limited by the embodiments and the accompanying drawings. The protective scope of the present disclosure should be construed based on the following claims, and all the technical spirit in the equivalent scope thereto should be construed as falling within the scope of the present disclosure.

As described above, the exemplary embodiments have been described and illustrated in the drawings and the specification. The exemplary embodiments were chosen and described in order to explain certain principles of the disclosure and their practical application, to thereby enable others skilled in the art to make and utilize various exemplary embodiments of the present disclosure, as well as various alternatives and modifications thereof. As is evident from the foregoing description, certain aspects of the present disclosure are not limited by the particular details of the examples illustrated herein, and it is therefore contemplated that other modifications and applications, or equivalents thereof, will occur to those skilled in the art. Many changes, modifications, variations and other uses and applications of the present construction will, however, become apparent to those skilled in the art after considering the specification and the accompanying drawings. All such changes, modifications, variations and other uses and applications which do not depart from the spirit and scope of the disclosure are deemed to be covered by the disclosure which is limited only by the claims which follow.

### [Description of Reference Numerals]

10: Seatback frame
11: Accommodation part
20: Armrest
30: Armrest pop-up device
31: Bracket
32: Movable member
321: Passageway
321a: Inlet
321b: First groove
321c: Third groove
321d: Partition wall
321e: Inclined surface
321f: Guide member
321g: First inclined surface
321h: Second inclined surface
321i: Second groove
322: Through-hole
33: Shaft
331: Protrusion
34: Support member
341: Insertion protrusion
342: Catching projection
35: Elastic member
36: Pin member
361: Pin
362: Rotary shaft
37: Cover

## Claims

1. An armrest pop-up device configured to pop up an armrest accommodated in an accommodation part of a seatback frame so that the armrest is withdrawn from the accommodation part, or to accommodate the armrest that is popped up in the accommodation part.

2. The armrest pop-up device of claim 1, comprising:
a bracket configured to be coupled to the seatback frame;
a shaft having one end configured to be connected to the armrest;
a movable member having one end connected to another end of the shaft opposite to the one end of the shaft, the movable member being movable in the bracket and having a passageway positioned in the movable member;
a support member coupled to the bracket and positioned facing the another end of the shaft;
an elastic member positioned between the shaft and the support member, the elastic member having one end positioned adjacent to the another end of the shaft through a through-hole positioned in the movable member, and another end coupled to the support member, the elastic member being configured to be compressed by being pushed by the shaft; and
a pin member coupled to the support member and having a pin,
wherein the movable member is configured to receive a pressing force of the armrest such that the movable member moves, and
wherein the pin is configured to be positioned inside or outside the passageway by an operation of the movable member,
wherein, optionally, a cover is coupled to one open side of the bracket, and the cover is configured to be coupled to the seatback frame.

3. The armrest pop-up device of claim 2, wherein the passageway comprises:
an inlet having a width that decreases in an inward direction;
a first groove communicating with the inlet and positioned at a first end of an inner end of the passageway;
a guide member positioned between the inlet and the first groove, having a triangular shape, and having a second groove;
a third groove communicating with the inlet, spaced apart from the first groove at an interval, and positioned at a second end of the inner end of the passageway adjacent to the first groove; and
a partition wall disposed between the first groove and the third groove and having an inclined surface, the inclined surface being directed toward the second groove, and
wherein the guide member comprises:
a first inclined surface configured to guide the pin so that the pin is positioned in the first groove; and
a second inclined surface that defines an acute angle with respect to the first inclined surface, the second inclined surface being configured to guide the pin from the third groove toward the inlet,
wherein, optionally, the first groove, the second groove, the third groove, and the pin are disposed on a same horizontal plane extending through the passageway, and/or wherein, optionally, when viewed from a top of a longitudinal cross-section of the passageway, an end of the first inclined surface opposite to another end of the first inclined surface meeting with the second inclined surface is positioned higher than the first groove.

4. The armrest pop-up device of claim 3, wherein when the armrest positioned outside the accommodation part is pressed, the movable member is configured to receive the pressing force of the armrest at a same time when the armrest is inserted into the accommodation part, and the movable member is configured to move in a direction toward the pin, such that the pin positioned outside the passageway moves to the first groove.

5. The armrest pop-up device of claim 4, wherein when the pressing force applied to the armrest is eliminated, the elastic member, which is configured to be stretched after being compressed by being pressed by the shaft, is configured to apply an elastic force to the movable member connected to the shaft, the movable member is configured to move in a direction toward the accommodation part, the pin is configured to move from the first groove to the second groove, and the shaft and the movable member are configured to be restricted in movement toward the accommodation part when the pin is positioned in the second groove, such that an accommodated state of the armrest is maintained.

6. The armrest pop-up device of anyone of claims 3-5, wherein when the armrest accommodated in the accommodation part is pressed, the movable member is configured to receive the pressing force of the armrest, and the movable member is configured to move in a direction toward the pin, such that the pin is moved from the second groove to the third groove.

7. The armrest pop-up device of claim 6, wherein when the pressing force applied to the armrest is eliminated, the elastic member, which is configured to be stretched to an original state after being compressed by being pressed by the shaft, is configured to apply an elastic force to the movable member connected to the shaft, the movable member is configured to move in a direction toward the accommodation part, the pin is configured to move from the third groove to a position outside the passageway, and the elastic member is configured to apply the elastic force to the shaft connected to the movable member, such that a pop-up state of the armrest is implemented in which the armrest connected to the shaft is withdrawn from the accommodation part.

8. The armrest pop-up device of anyone of claims 2-7, wherein the support member comprises:
an insertion protrusion protruding toward the elastic member and inserted into an inner-diameter portion of the elastic member; and
a pair of catching projections positioned at two opposite sides of one surface of the support member to which the pin member is coupled.

9. The armrest pop-up device of anyone of claims 2-8, wherein the support member further includes a rotary shaft positioned on a bottom surface of the pin member, and the rotary shaft is coupled to one surface of the support member.

10. The armrest pop-up device of claim 9, wherein the pin member is coupled to be positioned between a pair of catching projections positioned at two opposite sides of one surface of the support member, and the pin member is rotatable about the rotary shaft within a range between the pair of catching projections,
wherein, optionally, the range between the pair of catching projections is greater than a thickness of a partition wall disposed between a first groove and a third groove, the first groove and the third groove being positioned at a first end and a second end of an inner end of the passageway, respectively, and/or the range between the pair of catching projections is equal to or smaller than a width of an inlet of the passageway at an open end thereof.

11. The armrest pop-up device of anyone of claims 2-10, wherein a protrusion of the shaft is positioned at the another end of the shaft, and the protrusion of the shaft is inserted into an inner-diameter portion of the elastic member.

12. The armrest pop-up device of anyone of claims 3-11,
wherein when the pressing force applied to the armrest is eliminated, the elastic member is configured to expand to an original state,
wherein the second groove is defined to be sunken in a direction opposite to a direction of expansion of the elastic member, such that movement of the shaft and the movable member toward the accommodation part is restricted when the pin is positioned in the second groove.

13. The armrest pop-up device of anyone of claims 3-12, wherein when viewed from a top of a longitudinal cross-section of the passageway, the inclined surface of the partition wall forms an acute angle with respect to a sidewall surface of the first groove, and the inclined surface of the partition wall forms an obtuse angle with respect to a sidewall surface of the third groove.

14. The armrest pop-up device of anyone of claims 3-13, wherein when viewed from a top of a longitudinal cross-section of the passageway, an end of the second inclined surface opposite to another end of the second inclined surface meeting with the first inclined surface is positioned higher than the third groove.

15. The armrest pop-up device of anyone of claims 3-14, wherein a width between the second inclined surface and a sidewall surface of the passageway adjacent to the second inclined surface decreases toward the inlet.
